# FASCICULE DE BREVET EUROPEEN

(11) **EP 0 451 065 B1**
(45) Date de publication et mention de la délivrance du brevet: **14.09.1994**
(21) Numéro de dépôt: 91420109.0
(22) Date de dépôt: 29.03.1991
(51) Int. Cl.: H02K 15/00, H02K 15/10, H02K 15/06

(54) **Procédé et dispositif pour l'isolation des têtes de bobinage électrique**
Verfahren und Vorrichtung für die Isolierung von Köpfen elektrischer Wicklungen
Process and device for insulating the heads of electrical windings

(30) Priorité: 02.04.1990 FR 9004482
(43) Date de publication de la demande: 09.10.1991
(73) Titulaire: SPIREL, F-73660 Saint Remy de Maurienne (FR)
(72) Inventeur: Stirer, Jean-José, F-73660 Saint Remy de Maurienne (FR); Rubat, Jacky, F-73130 Sainte Marie de Cuines (FR)
(74) Mandataire: Meylan, Robert Maurice

(56) Documents cités:
- DE-A- 3 212 308
- DE-C- 747 968
- US-A- 4 290 190
- PATENT ABSTRACTS OF JAPAN vol. 4, no. 130 (E-25)(612) 12 septembre 1980,& JP-A-55 83436 (MATSUSHITA) 23 juin 1980,

## Description

La présente invention concerne la fabrication des bobinages électriques, et plus particulièrement l'isolation des têtes de bobinage électrique de forme générale cylindrique.

L'invention s'applique en particulier à l'isolation d'une tête de bobinage d'un stator de moteur électrique.

Un stator de moteur électrique comprend un circuit magnétique de forme générale cylindrique, percé d'un alésage axial cylindrique muni de nervures longitudinales. Des conducteurs électriques sont bobinés dans le stator et comportent des portions longitudinales de conducteurs logées dans les nervures longitudinales de l'alésage axial cylindrique, et des portions d'extrémité. Les portions d'extrémité des conducteurs électriques dépassent en bout du circuit magnétique et sont recourbées pour passer d'une nervure longitudinale à l'autre. L'ensemble des portions d'extrémité recourbées des conducteurs forme une tête de bobinage dont la forme générale rappelle celle d'un chignon.

La tête de bobinage doit être maintenue en position, pour éviter que la rotation du moteur ne la déforme et provoque le frottement des conducteurs sur le boîtier externe du moteur. La tête de bobinage doit également être isolée du circuit magnétique, et il faut éviter que sa déformation éventuelle ne provoque le contact des conducteurs électriques sur le circuit magnétique.

Le maintien et l'isolation des têtes de bobinage des moteurs électriques actuels tendent à être assurés par l'adaptation d'un capot isolant constituant une paroi cylindrique extérieure s'appliquant sur la face externe de la tête de bobinage, une paroi cylindrique intérieure s'appliquant sur la face interne du bobinage et permettant le passage du rotor de moteur, et éventuellement une paroi frontale s'appliquant sur la partie frontale de la tête de bobinage.

La difficulté est de disposer un tel capot isolant sur une tête de bobinage. En effet, la tête de bobinage est formée de plusieurs paquets de boucles de conducteurs électriques, les conducteurs électriques tendant naturellement à s'écarter quelque peu les uns des autres. Lors de la réalisation du bobinage, les paquets de boucles formant la tête de bobinage sont naturellement dilatés, et dépassent d'une part du diamètre extérieur du circuit magnétique et d'autre part du diamètre intérieur du circuit magnétique. Il faut donc réaliser d'une part un passage axial interne, en écartant les conducteurs électriques, pour assurer le passage du rotor et le passage de la paroi cylindrique intérieure du capot isolant. Il faut en outre resserrer la partie externe des paquets de boucles formant la tête de bobinage, pour la ramener à un diamètre inférieur au diamètre externe du stator, et pour permettre l'adaptation de la paroi cylindrique extérieure du capot isolant. Ces opérations sont actuellement effectuées à la main, et sont rendues d'autant plus délicates qu'il faut à la fois écarter la partie centrale des paquets de conducteurs et resserrer la partie externe des paquets de conducteurs, pour permettre l'adaptation du capot isolant. La simultanéité de ces opérations requiert l'utilisation d'une main d'oeuvre qualifiée et particulièrement habile.

La présente invention a pour objet d'assurer la pose automatique d'un capot isolant sur une tête de bobinage électrique, et en particulier la pose automatique d'un capot isolant sur une tête de bobinage en bout de stator de moteur électrique.

L'invention permet la pose d'un tel capot isolant constitué en une seule pièce comportant une paroi cylindrique axiale intérieure pénétrant à l'intérieur de la tête de bobinage en prolongement de l'alésage interne du circuit magnétique, comportant une paroi cylindrique axiale extérieure s'adaptant autour de la tête de bobinage en prolongement de la face cylindrique externe du circuit magnétique, et comportant une paroi frontale reliant les deux parois cylindriques intérieure et extérieure.

L'invention permet en particulier de disposer de tels capots isolants sans nécessiter de prévoir, au voisinage des bords des deux parois cylindriques intérieure et extérieure, des parties biseautées permettant l'introduction. Ainsi, les capots isolants peuvent comporter des parois cylindriques axiales intérieure et extérieure dont les faces sont parfaitement cylindriques et prolongent parfaitement la paroi d'alésage interne du circuit magnétique et la face externe du circuit magnétique. De même, l'invention est compatible avec la pose de tels capots isolants dont les parois sont minces, laissant un maximum de place pour les conducteurs électriques de la tête de bobinage.

L'invention permet de réaliser automatiquement les opérations de pose du capot isolant au moyen d'un dispositif particulièrement efficace et peu onéreux, ne requérant pas une main d'oeuvre particulièrement qualifiée, et dont le fonctionnement est très fiable.

Pour atteindre ces objets ainsi que d'autres, le procédé selon l'invention comprend les étapes suivantes :
a) introduire dans l'alésage axial de stator, par l'extrémité opposée à la tête de bobinage à isoler, un mandrin à tête effilée, et le déplacer axialement pour traverser progressivement la tête de bobinage et former dans celle-ci, par déplacement et déformation des conducteurs électriques, un passage de diamètre égal au diamètre du mandrin,
b) dilater la partie de mandrin traversant la tête de bobinage, pour produire, dans la tête de bobinage, un passage de diamètre légèrement supérieur au diamètre extérieur de paroi cylindrique intérieure de capot isolant,
c) tout en maintenant en place la partie de mandrin dilatée dans la tête de bobinage, presser radialement la tête de bobinage autour de la partie de mandrin dilatée conservant son diamètre, pour réduire le diamètre extérieur de la tête de bobinage en deçà du diamètre intérieur de paroi cylindrique extérieure de capot isolant,
d) relâcher la surface extérieure de tête de bobinage, qui conserve un diamètre inférieur au diamètre intérieur de paroi cylindrique extérieure de capot isolant,
e) emmancher axialement le capot isolant sur la tête de bobinage, le mandrin restant en place et à l'état dilaté et sa surface périphérique s'escamotant progressivement au passage de la paroi cylindrique intérieure de capot isolant,
f) après adaptation complète du capot isolant, rétracter la partie de mandrin dilatée, et retirer axialement le mandrin hors de l'alésage axial de stator.

De préférence, dans la zone traversant la tête de bobinage, la surface périphérique de mandrin est formée d'un manchon de matière élastique d'épaisseur supérieure à l'épaisseur de paroi axiale intérieure de capot isolant, de sorte que, pendant l'emmanchement axial du capot isolant sur la tête de bobinage, le bord de paroi axiale intérieure déforme le manchon de matière élastique et s'introduit entre ledit manchon et les conducteurs formant la tête de bobinage.

Pour la mise en oeuvre de ce procédé, l'invention prévoit un dispositif qui comprend :
- un support de stator, conformé pour recevoir et maintenir un stator pendant l'adaptation du capot isolant, et notamment interdire son déplacement axial,
- au moins deux mâchoires mobiles associées à des moyens d'actionnement de mâchoires pour presser radialement la tête de bobinage, les mâchoires étant déplaçables entre une première position dans laquelle elles pressent la tête de bobinage pour réduire son diamètre extérieur à une valeur inférieure au diamètre intérieur de paroi cylindrique extérieure de capot isolant, et une seconde position dans laquelle elles sont à l'écart de la tête de bobinage et autorisent le passage de la paroi cylindrique extérieure de capot isolant,
- un mandrin axial mobile comportant une partie expansible,
- des moyens pour déplacer axialement le mandrin entre une position de retrait dans laquelle il est à l'écart du stator retenu dans le support de stator, et une position d'introduction dans laquelle le mandrin traverse l'alésage axial de stator et dans laquelle la partie expansible de mandrin est logée dans la zone en regard des mâchoires et destinée à être occupée par la tête de bobinage,
- des moyens pour dilater la partie expansible de mandrin et lui conférer sélectivement un diamètre légèrement supérieur au diamètre extérieur de paroi cylindrique intérieure de capot isolant.

Dans un mode de réalisation avantageux, les moyens pour dilater la partie expansible de mandrin sont des moyens mécaniques, permettant de maintenir une rigidité suffisante de la partie expansible de mandrin. Pour cela, le mandrin axial comprend une broche tubulaire rigide, de diamètre légèrement inférieur au diamètre de l'alésage axial de stator, la broche tubulaire étant munie d'un alésage axial de broche dans lequel coulisse à faible jeu une tige de mandrin entraînée en translation par des moyens d'entraînement, la broche tubulaire étant prolongée par un manchon axial tubulaire en matière élastiquement déformable présentant, à l'état de repos, un diamètre extérieur sensiblement égal au diamètre de broche tubulaire rigide, et comportant un alésage axial de manchon dont le diamètre intérieur, à l'état de repos, est inférieur au diamètre de l'alésage axial de broche, de sorte que la pénétration axiale de la tige de mandrin dans le manchon axial tubulaire provoque la dilatation radiale appropriée dudit manchon axial tubulaire, et que le retrait de la tige de mandrin provoque le retrait du manchon axial tubulaire à son état de repos.

D'autres objets, caractéristiques et avantages de la présente invention ressortiront de la description suivante de modes de réalisation particuliers, faite en relation avec les figures jointes, parmi lesquelles :
- la figure 1 est une vue en perspective d'un stator de moteur électrique et d'un capot isolant destiné à être adapté sur une tête de bobinage du stator ;
- la figure 2 représente schématiquement en vue de côté, en coupe longitudinale, le stator de la figure 1 avant la formation des têtes de bobinage par le dispositif de la présente invention ;
- la figure 3 représente la première étape de formation des têtes de bobinage, par pénétration d'un mandrin pointu dans l'alésage axial du stator ;
- la figure 4 illustre l'étape de dilatation de la partie expansible de mandrin ;
- la figure 5 illustre l'étape de pression de la face externe de tête de bobinage ;
- la figure 6 montre le capot isolant disposé sur la tête de bobinage ainsi formée ;
- la figure 7 illustre, à plus grande échelle, l'étape d'introduction du capot isolant sur la tête de bobinage préformée ;
- la figure 8 est une vue générale de côté, en coupe longitudinale, d'un dispositif de pose de capot isolant selon la présente invention ;
- la figure 9 est une vue de dessus du dispositif de la figure 8 ; et
- la figure 10 est une vue en coupe transversale selon le plan A-A de la figure 9.

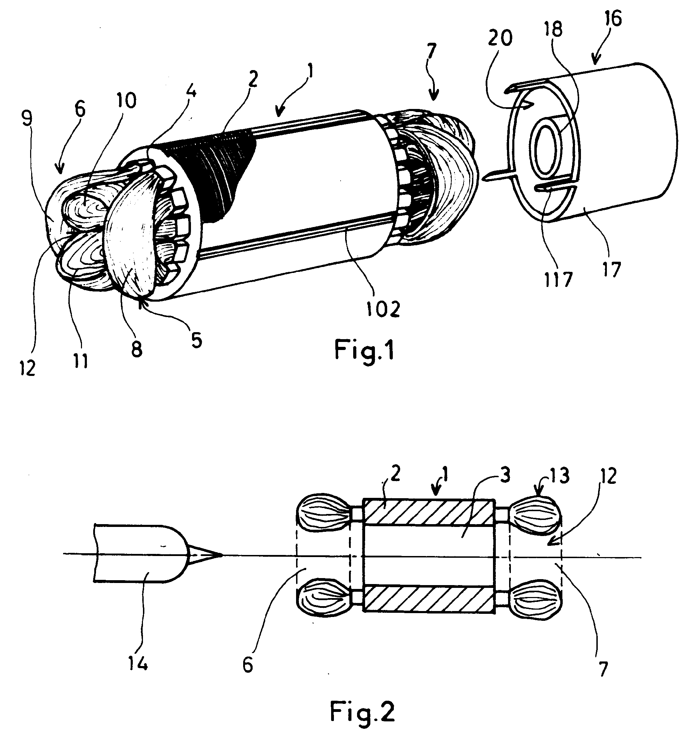

Comme le représentent les figures 1 et 2, un stator 1 de moteur électrique comprend un circuit magnétique 2 de forme générale cylindrique percé d'un alésage axial cylindrique 3. L'alésage axial cylindrique 3 est muni de nervures longitudinales ménagées dans la paroi périphérique de l'alésage 3. Des conducteurs électriques sont bobinés dans le stator et comportent des portions longitudinales de conducteurs logées dans les nervures longitudinales du circuit magnétique, et des portions d'extrémité de conducteurs dépassant en bout du circuit magnétique et recourbées pour passer d'une nervure longitudinale à l'autre. Par exemple, sur la figure 1, on peut distinguer l'extrémité 4 d'une première nervure longitudinale, de laquelle sort un paquet de conducteurs électriques qui sont recourbés en boucles pour pénétrer dans une extrémité 5 de seconde nervure longitudinale. Les paquets de conducteurs aux extrémités du circuit magnétique forment deux têtes de bobinage 6 et 7, dépassant des extrémités du circuit magnétique 2.

Dans le mode de réalisation qui a été représenté sur la figure 1, chaque tête de bobinage 6 ou 7 est formée de quatre paquets de boucles de conducteurs électriques. Par exemple, la tête de bobinage 6 comprend un premier paquet de boucles de conducteurs électriques 8 reliant les extrémités 4 et 5 de nervures longitudinales, un second paquet de boucles de conducteurs électriques 9, un troisième paquet de boucles de conducteurs électriques 10 et un quatrième paquet de boucles de conducteurs électriques 11, disposés comme le représente la figure.

Après la réalisation du bobinage électrique, les têtes de bobinage 6 et 7 sont formées de paquets de boucles relativement volumineux, qui tendent à occuper tout l'espace en sortie du circuit magnétique, ne laissant qu'un passage axial 12 très réduit au voisinage de l'axe médian du stator 1, les surfaces externes 13 des têtes de bobinage telles que la tête de bobinage 7 présentant un diamètre externe supérieur au diamètre extérieur du circuit magnétique 2. Ainsi, les conducteurs électriques des têtes de bobinage ne permettent pas, dans cet état, le passage d'un rotor dans l'alésage axial 3 du circuit magnétique. De même, les têtes de bobinage ne permettent pas la disposition du stator 1 dans un capot externe de moteur.

L'objectif est de réduire la dimension des têtes de bobinage, et plus particulièrement de la tête de bobinage 7, et de l'isoler par adaptation d'un capot isolant 16 tel que représenté sur la figure 1.

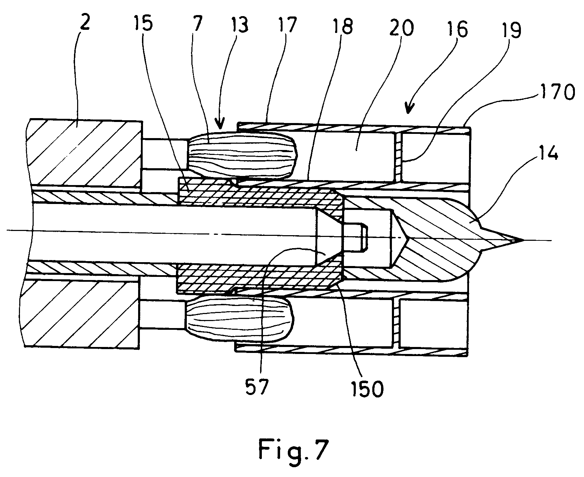

Dans le mode de réalisation représenté sur les figures 1 et 7, le capot isolant 16 se présente sous forme d'un double cylindre de révolution, avec une paroi cylindrique extérieure 17 et une paroi cylindrique intérieure 18 coaxiales, reliées l'une à l'autre par une paroi frontale 19 représentée sur la figure 7. Les parois 17, 18 et 19 forment un logement annulaire 20 destiné à contenir la seconde tête de bobinage 7. La paroi cylindrique intérieure 18 du capot isolant 16 a un diamètre intérieur sensiblement égal au diamètre de l'alésage axial 3 de stator. La paroi cylindrique extérieure 17 a un diamètre extérieur sensiblement égal au diamètre extérieur du circuit magnétique 2 de stator. Le bord de la paroi cylindrique extérieure 17 est prolongé par des pattes de guidage et de fixation 117 destinées à s'engager dans des rainures longitudinales périphériques 102 du circuit magnétique 2.

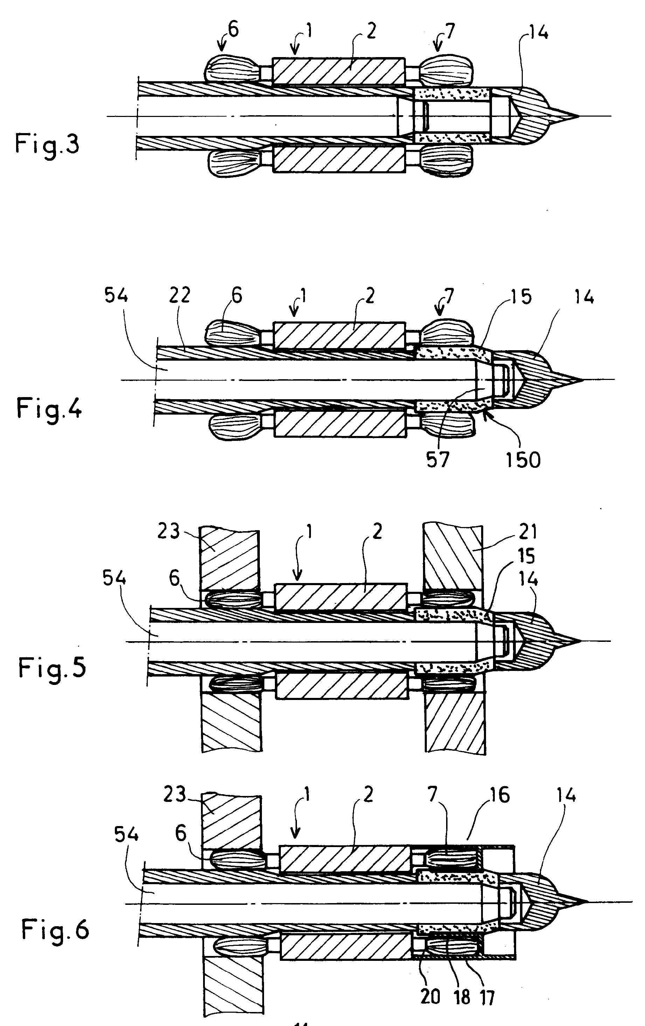

La première opération, représentée sur la figure 3, consiste à introduire, par le passage axial 12 et l'alésage 3, un mandrin 14 à tête effilée. Le mandrin 14 est déplacé axialement, de la gauche vers la droite sur les figures 2 et 3, pour traverser progressivement la première tête de bobinage 6, l'alésage 3, puis la seconde tête de bobinage 7. Le mandrin 14 forme dans les têtes de bobinage 6 et 7, par déplacement et déformation des conducteurs électriques, un passage de diamètre égal au diamètre du mandrin 14. Le diamètre du mandrin 14 est choisi pour être seulement légèrement inférieur au diamètre interne de l'alésage 3, permettant le coulissement du mandrin 14 à faible jeu dans l'alésage 3.

L'opération suivante, représentée sur la figure 4, consiste à dilater la partie expansible 15 du mandrin 14, partie expansible qui est logée dans la zone de mandrin 14 traversant la seconde tête de bobinage 7. La partie expansible 15 de mandrin 14 présente un diamètre extérieur qui peut être dilaté jusqu'à un diamètre légèrement supérieur au diamètre intérieur de l'alésage de circuit magnétique. En réalité, le diamètre extérieur de partie expansible 15 doit être dilaté jusqu'à un diamètre supérieur au diamètre extérieur de paroi cylindrique intérieure 18 du capot isolant 16.

L'étape suivante, représentée sur la figure 5, consiste à maintenir en place le mandrin 14 dilaté dans la seconde tête de bobinage 7, tout en pressant radialement la seconde tête de bobinage 7 autour de la partie expansible 15 dilatée de mandrin 14, jusqu'à réduire le diamètre extérieur de la tête de bobinage 7 en deçà du diamètre intérieur de paroi cylindrique extérieure 17 du capot isolant 16. La réduction du diamètre extérieur de la tête de bobinage 7 peut être effectuée par des mâchoires 21 à déplacement radial.

On retire ensuite les mâchoires 21, et les conducteurs de la seconde tête de bobinage 7 gardent suffisamment de déformation permanente pour que leur diamètre extérieur reste inférieur au diamètre intérieur de paroi cylindrique extérieure 17 de capot isolant 16.

L'étape ultérieure consiste à emmancher axialement le capot isolant 16 sur la seconde tête de bobinage 7, pour venir coiffer entièrement la tête de bobinage, comme le représente la figure 6. Dans cette étape, le mandrin 14 reste en place à l'état dilaté. Toutefois, sa partie expansible 15 comprend une couche externe en une matière élastique, de sorte que sa surface périphérique s'escamote progressivement au passage de la paroi cylindrique intérieure 18 du capot isolant. On a représenté sur la figure 7 plus en détails et à plus grande échelle cette étape d'introduction de capot isolant : sur cette figure, le capot isolant 16 est représenté en une position intermédiaire, en cours d'introduction. La paroi extérieure 17 du capot isolant 16 vient s'adapter sans difficulté autour de la face externe 13 des conducteurs de la seconde tête de bobinage 7, puisque ladite face externe 13 présente un diamètre plus petit que le diamètre intérieur de paroi extérieure 17 du capot isolant. La paroi cylindrique intérieure 18 du capot isolant 16, qui présente un diamètre extérieur légèrement inférieur au diamètre intérieur de la seconde tête de bobinage, s'engage sans difficulté dans le diamètre intérieur des conducteurs électriques de la seconde tête de bobinage 7. Pendant l'introduction, la paroi intérieure 18 vient comprimer et déformer la surface périphérique externe en matière élastique de la partie expansible 15 du mandrin 14, matière élastique qui s'escamote progressivement au passage de la paroi cylindrique intérieure 18 pour permettre l'insertion de la paroi 18 entre la partie expansible 15 de mandrin 14 et les conducteurs électriques de la tête de bobinage 7. Le maintien des conducteurs électriques de la seconde tête de bobinage 7 est ainsi assuré par la matière formant la partie expansible 15 du mandrin 14 jusqu'à ce que ce maintien puisse être assuré par la paroi interne 18 du capot isolant 16.

En fin d'emmanchement axial, sur la figure 6, les bords respectifs de la paroi cylindrique intérieure 18 et de la paroi cylindrique extérieure 17 du capot isolant 16 viennent porter contre la face frontale du circuit magnétique 2. Les conducteurs électriques de la seconde tête de bobinage 7 se trouvent alors emprisonnés dans le logement annulaire 20 formé par le capot isolant 16.

Dans le mode de réalisation qui a été représenté sur les figures 3 à 7, le procédé de l'invention comprend, simultanément, le préformage de la première tête de bobinage 6 : le mandrin 14 comprend une portion élargie 22, de diamètre légèrement supérieur au diamètre de l'alésage 3, de sorte que, en position de pénétration maximale du mandrin 14 dans le stator 1, la portion élargie 22 vient écarter les conducteurs électriques formant la première tête de bobinage 6, et augmente ainsi le diamètre intérieur du passage 12 au niveau de cette première tête de bobinage 6. Cette opération est représentée sur les figures 3 et 4.

Sur les figures 5 et 6, des mâchoires 23 viennent presser radialement la surface extérieure des conducteurs électriques de la première tête de bobinage 6, pour diminuer son diamètre extérieur et le ramener en deçà du diamètre extérieur du circuit magnétique 2. Cette première tête de bobinage 6 ainsi préformée est prête pour des opérations ultérieures de câblage, puis des opérations ultérieures de pose d'un autre capot isolant de forme différente. On remarque en outre que, dans l'étape représentée sur la figure 6, les secondes mâchoires 23 assurent et complètent le maintien du stator 1 pendant le déplacement du capot isolant 16 qui vient recouvrir progressivement la seconde tête de bobinage 7.

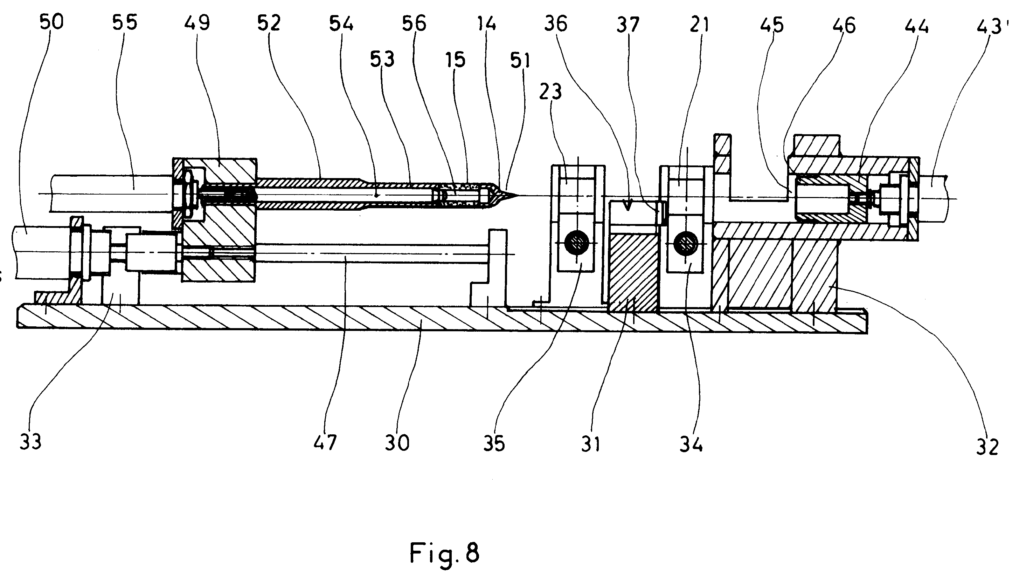

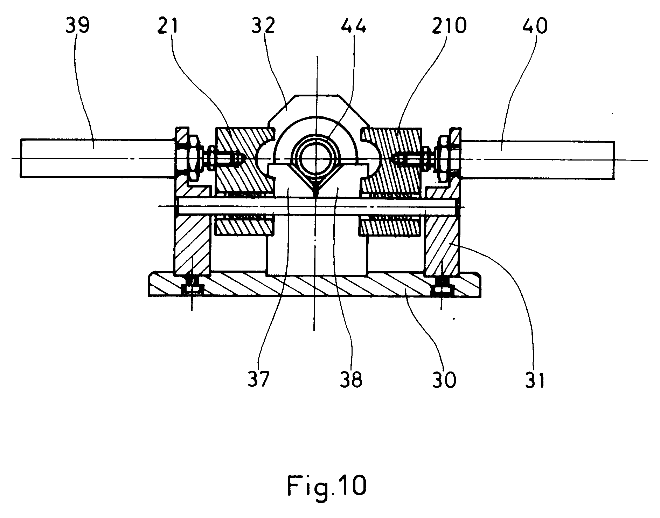

Les opérations qui ont été précédemment décrites sont réalisées, selon l'invention, par un dispositif automatique assurant à la fois le maintien du stator 1, le déplacement relatif du mandrin 14, le déplacement relatif des mâchoires 21 et 23, et le déplacement relatif du capot 16. Ce dispositif est représenté sur les figures 8 à 10.

Le dispositif comprend un bâti 30 portant un support de stator 31, un support de capot 32, et un support de mandrin 33 et deux supports de mâchoires 34 et 35.

Le support de stator 31 est conformé pour recevoir et maintenir un stator tel que le stator 1 pendant l'adaptation du capot isolant 16. Dans le mode de réalisation représenté sur les figures, le support de stator 31 est un berceau 36 formé de parois inférieure et latérales, comportant des butées antérieures 37 et 38. Le circuit magnétique 2 du stator 1 est disposé sur le berceau 36 et vient en appui contre les butées antérieures 37 et 38, qui interdisent son déplacement axial tout en autorisant le libre passage du mandrin axial mobile 14. Le support de stator 31 est fixe sur le bâti 30.

Deux mâchoires opposées 21 et 210 sont mobiles latéralement, perpendiculairement à l'axe longitudinal B-B du dispositif, entre une première position escamotée dans laquelle les mâchoires libèrent l'espace destiné à être occupé par le stator 1 et autorisent le libre coulissement axial d'un capot isolant 16, et une position serrée dans laquelle les mâchoires 21 et 210 sont rapprochées l'une de l'autre pour presser la périphérie de la seconde tête de bobinage 7 du stator 1 jusqu'à un diamètre plus petit que le diamètre intérieur de paroi cylindrique extérieure 17 de capot isolant 16. Les mâchoires 21 et 210 sont actionnées respectivement par un vérin 39 et un vérin 40. Les mâchoires 21 et 210, ainsi que les vérins 39 et 40, sont portés par le support de mâchoires 34, dans la zone antérieure en avant du berceau 36, ou zone destinée à être occupée par la seconde tête de bobinage 7 du stator 1.

De même, deux mâchoires 23 et 230 sont disposées dans la zone destinée à être occupée par la première tête de bobinage 6 du stator 1, et sont actionnées par deux vérins respectifs 41 et 42, et portées par le support de mâchoires postérieur 35. Le stator peut être ainsi disposé dans le berceau 36, coaxialement à l'axe longitudinal B-B du dispositif, et ses deux têtes de bobinage 6 et 7 peuvent être pressées radialement par les mâchoires 21, 210, 23 et 230.

Le support de capot 32 comprend un vérin d'actionnement 43 pour l'entraînement axial du capot isolant. La tige du vérin 43 porte un cylindre 44 constituant un support mobile de capot. Le cylindre 44 est monté à coulissement dans un alésage 45 du support de capot 32. Le cylindre support mobile de capot 44 comprend une portion d'extrémité 46 de diamètre réduit, laissant un jeu entre l'alésage 45 et le cylindre support mobile de capot 44 pour l'engagement d'une portion correspondante 170 de paroi cylindrique extérieure 17 d'un capot isolant 16. La portion correspondante 170 de paroi, représentée sur la figure 7, est ainsi engagée sur la partie d'extrémité 46 du support mobile de capot 44, qui porte ainsi le capot isolant 16. Par actionnement du vérin 43, un capot isolant 16 disposé et porté sur le cylindre support mobile de capot 44 peut être déplacé entre une position de retrait, représentée sur la figure 8, dans laquelle le capot isolant 16 est à l'écart du stator 1, et une position d'introduction dans laquelle le capot isolant 16 est engagé sur la seconde tête de bobinage 7 du stator 1 comme le représente la figure 6. Le cylindre support mobile de capot 44 est coaxial à l'axe longitudinal B-B du dispositif, et son déplacement se fait axialement.

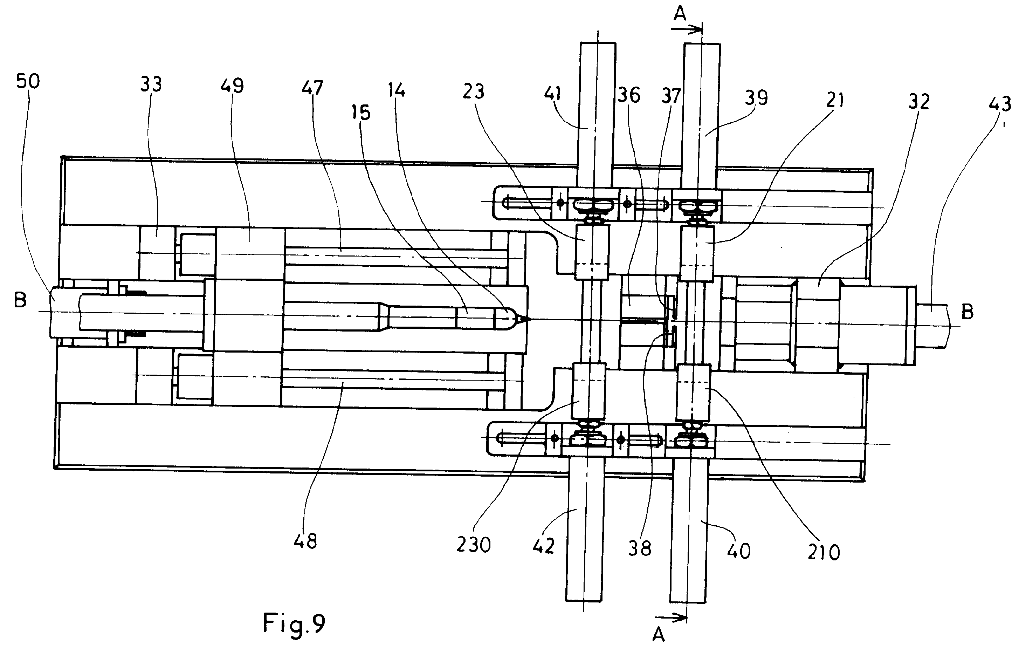

Le support de mandrin 33 comporte deux tiges de guidage latérales 47 et 48 longitudinales disposées de part et d'autre de l'axe longitudinal B-B du dispositif. Les tiges 47 et 48 sont fixes sur le support de mandrin 33 et le bâti 30, et portent un chariot coulissant 49 entraîné en translation longitudinale par un vérin de chariot 50. Le chariot mobile 49 porte le mandrin 14, et est mobile entre deux positions, une position de retrait représentée sur les figures 8 et 9 dans laquelle le mandrin 14 est à l'écart de la zone occupée par le stator 1, et une position d'introduction dans laquelle le mandrin 14 traverse l'alésage du stator 1, et dans laquelle la partie expansible 15 de mandrin est en regard des mâchoires 21 et 210 dans la zone destinée à être occupée par la seconde tête de bobinage 7, comme le représentent les figures 3 à 6.

Le mandrin 14 comporte une tête 51 rigide pointue, pour favoriser sa pénétration axiale dans les têtes de bobinages 6 et 7.

Le mandrin axial 14 comprend une broche tubulaire rigide 52, de diamètre extérieur légèrement inférieur au diamètre de l'alésage axial 3 de stator 1, la broche tubulaire étant elle-même munie d'un alésage axial de broche 53 dans lequel coulisse à faible jeu une tige de mandrin 54. La tige de mandrin 54 est entraînée en translation par un vérin de tige 55. La broche tubulaire 52 est prolongée par un manchon axial tubulaire 15 formant la partie expansible du mandrin 14. Le manchon axial tubulaire 15 est en une matière élastiquement déformable présentant, à l'état de repos, un diamètre extérieur sensiblement égal au diamètre de broche tubulaire rigide 52, et comporte un alésage axial 56 de manchon dont le diamètre intérieur, à l'état de repos, est inférieur au diamètre de l'alésage axial 53 de broche tubulaire rigide 52. Ainsi, par pénétration axiale de la tige de mandrin 54 dans le manchon axial tubulaire 15, on provoque la dilatation radiale dudit manchon axial tubulaire 15. De même, le retrait de la tige de mandrin 54 provoque le retrait élastique du manchon axial tubulaire 15 à son état de repos.

L'épaisseur de la paroi du manchon axial tubulaire 15 à l'état dilaté est supérieure à l'épaisseur de la paroi axiale intérieure 18 du capot isolant 16. Le diamètre intérieur du manchon axial tubulaire 15, à l'état de repos, est choisi suffisamment petit pour que, par pénétration de la tige de mandrin 54, la dilatation du manchon 15 soit telle que son diamètre extérieur devienne légèrement plus grand que le diamètre extérieur de la paroi cylindrique intérieure 18 du capot isolant 16.

Le manchon axial tubulaire 15 est réalisé par exemple en polyuréthane de dureté SHORE comprise entre 25 et 30. Cette dureté doit être assez grande pour éviter la déformation du manchon 15 sous l'effet de la force de serrage des mâchoires 21 et 210 lors du serrage périphérique de la tête de bobinage 7. Et cette dureté doit être assez faible pour permettre la déformation progressive de la face périphérique du manchon 15 par la paroi extérieure 18 de capot isolant lors de sa pénétration entre le manchon 15 et la tête de bobinage 7 du stator 1. La dureté peut être choisie différente, en fonction du diamètre du fil de bobinage, en recourant à de simples essais à la portée de l'homme du métier. Les valeurs comprises entre 25 et 30 SHORE conviennent pour des formes de bobinages telles que représentées sur les figures et dont le fil de bobinage a un diamètre de 0,2 ou 0,3 millimètre environ.

Pour assurer une déformation correcte du manchon tubulaire 15 par la paroi cylindrique intérieure 18 de capot isolant 16, il faut s'assurer que la surface externe antérieure 150 du manchon 15 est relativement conique, comme le représentent les figures 4 à 7. Pour cela, l'extrémité de la tige de mandrin 54 comporte une partie conique 57 qui vient se loger légèrement en retrait de l'extrémité antérieure du manchon 15 lorsque la tige 54 est en position d'avance maximale, comme le représentent les figures. De cette manière, lorsque le capot isolant 16 est introduit sur le manchon expansible tubulaire 15, la paroi intérieure cylindrique 18 du capot isolant 16 vient déformer élastiquement la portion périphérique du manchon élastique 15 comme le représente la figure 7.

La tête rigide 51 de la broche 52 prolonge le manchon axial tubulaire 15, et est reliée au corps de la broche 52 par deux tiges longitudinales périphériques de maintien diamétralement opposées. Les tiges se logent dans deux nervures extérieures longitudinales correspondantes prévues en périphérie du manchon axial tubulaire 15. Les tiges longitudinales assurent le maintien du manchon 15 sur la broche 52 entre le corps de broche et la tête rigide 51.

Le fonctionnement du dispositif permet d'assurer les étapes qui ont été précédemment décrites en relation avec les figures 2 à 7.

Dans le mode de réalisation qui a été décrit, l'expansion de la partie expansible 15 de mandrin est assurée par des moyens mécaniques, à savoir la tige de mandrin 54.

On peut envisager d'autres modes de réalisation selon l'invention pour assurer la dilatation de la partie expansible 15 du mandrin 14. Par exemple, on peut utiliser une enveloppe tubulaire déformable remplie d'un fluide non compressible tel que l'eau ou l'huile et reliée par une canalisation de fluide à des moyens de commande de pression de fluide.

## Revendications

1. Procédé pour l'isolation d'une tête de bobinage d'un stator (1) de moteur électrique, le stator (1) comprenant un circuit magnétique (2) généralement cylindrique percé d'un alésage axial cylindrique (3) muni de nervures longitudinales, des conducteurs électriques étant bobinés dans le stator et comportant des portions longitudinales de conducteurs logées dans les nervures longitudinales et des portions d'extrémité de conducteurs dépassant en bout du circuit magnétique (2) et recourbées pour passer d'une nervure longitudinale à l'autre, l'ensemble des portions d'extrémité recourbées des conducteurs formant une tête de bobinage (7), l'isolation de la tête de bobinage (7) étant assurée par un capot isolant (16) comportant une paroi cylindrique intérieure (18) et une paroi cylindrique extérieure (17) coaxiales reliées par une paroi frontale (19) pour former un logement annulaire (20) contenant la tête de bobinage (7), la paroi cylindrique intérieure (18) ayant un diamètre intérieur sensiblement égal au diamètre de l'alésage axial (3) de stator, la paroi cylindrique extérieure (17) ayant un diamètre extérieur sensiblement égal au diamètre extérieur du circuit magnétique (2) de stator (1),
caractérisé en ce qu'il comprend les étapes suivantes :
a) introduire dans l'alésage axial (3) de stator (1), par l'extrémité opposée à la tête de bobinage (7) à isoler, un mandrin (14) à tête effilée (51), et le déplacer axialement pour traverser progressivement la tête de bobinage (7) et former dans celle-ci, par déplacement et déformation des conducteurs électriques, un passage de diamètre égal au diamètre du mandrin (14),
b) dilater la partie de mandrin (15) traversant la tête de bobinage (7), pour produire, dans la tête de bobinage, un passage de diamètre légèrement supérieur au diamètre extérieur de paroi cylindrique intérieure (18) de capot isolant (16),
c) tout en maintenant en place la partie de mandrin (15) dilatée dans la tête de bobinage (7), presser radialement la tête de bobinage (7) autour de la partie de mandrin (15) dilatée conservant son diamètre, pour réduire le diamètre extérieur de la tête de bobinage (7) en deçà du diamètre intérieur de paroi cylindrique extérieure (18) de capot isolant (16),
d) relâcher la surface extérieure de tête de bobinage (7), qui conserve un diamètre inférieur au diamètre intérieur de paroi cylindrique extérieure (17) de capot isolant (16),
e) emmancher axialement le capot isolant (16) sur la tête de bobinage (7), le mandrin (14) restant en place et à l'état dilaté et sa surface périphérique s'escamotant progressivement au passage de la paroi cylindrique intérieure (18) de capot isolant (16),
f) après adaptation complète du capot isolant (16), rétracter la partie de mandrin (15) dilatée, et retirer axialement le mandrin (14) hors de l'alésage axial (3) de stator (1).

2. Procédé selon la revendication 1, caractérisé en ce que, dans la zone traversant la tête de bobinage (7), la surface périphérique de mandrin (14) est formée d'un manchon (15) de matière élastique d'épaisseur supérieure à l'épaisseur de paroi axiale intérieure (18) de capot isolant (16), de sorte que, pendant l'emmanchement axial du capot isolant (16) sur la tête de bobinage (7), le bord de paroi axiale intérieure (18) déforme le manchon (15) de matière élastique et s'introduit entre ledit manchon (15) et les conducteurs formant la tête de bobinage (7).

3. Dispositif pour l'isolation d'une tête de bobinage de stator de moteur électrique, mettant en oeuvre un procédé selon l'une des revendications 1 ou 2, le stator (1) comprenant un circuit magnétique (2) généralement cylindrique percé d'un alésage axial cylindrique (3) muni de nervures longitudinales, des conducteurs électriques étant bobinés dans le stator et comportant des portions longitudinales de conducteurs logées dans les nervures longitudinales et des portions d'extrémité de conducteurs dépassant en bout du circuit magnétique (2) et recourbées pour passer d'une nervure longitudinale à l'autre, l'ensemble des portions d'extrémité recourbées des conducteurs formant une tête de bobinage (7), et l'isolation de la tête de bobinage (7) étant assurée par un capot isolant (16) comportant une paroi cylindrique intérieure (18) et une paroi cylindrique extérieure (17) coaxiales reliées par une paroi frontale (19) pour former un logement annulaire (20) contenant la tête de bobinage (7), la paroi cylindrique intérieure (18) ayant un diamètre intérieur sensiblement égal au diamètre de l'alésage axial (3) de stator, la paroi cylindrique extérieure (17) ayant un diamètre extérieur sensiblement égal au diamètre extérieur du circuit magnétique (2) de stator (1),
caractérisé en ce qu'il comprend :
- un support de stator (31), conformé pour recevoir et maintenir un stator (1) pendant l'adaptation du capot isolant (16), et notamment interdire son déplacement axial,
- au moins deux mâchoires mobiles (21, 210) associées à des moyens d'actionnement de mâchoires (39, 40) pour presser radialement la tête de bobinage (7), les mâchoires (21, 210) étant déplaçables entre une première position dans laquelle elles pressent la tête de bobinage (7) pour réduire son diamètre extérieur à une valeur inférieure au diamètre intérieur de paroi cylindrique extérieure (17) de capot isolant (16), et une seconde position dans laquelle elles sont à l'écart de la tête de bobinage (7) et autorisent le passage de la paroi cylindrique extérieure (17) de capot isolant,
- un mandrin axial (14) mobile comportant une partie expansible (15),
- des moyens (49, 50) pour déplacer axialement le mandrin (14) entre une position de retrait dans laquelle il est à l'écart du stator (1) retenu dans le support de stator (31), et une position d'introduction dans laquelle le mandrin (14) traverse l'alésage axial (3) de stator (1) et dans laquelle la partie expansible (15) de mandrin (14) est logée en regard des mâchoires (21, 210) dans la zone destinée à être occupée par la tête de bobinage (7),
- des moyens (54) pour dilater la partie expansible (15) de mandrin et lui conférer sélectivement un diamètre légèrement supérieur au diamètre extérieur de paroi cylindrique intérieure (18) de capot isolant (16).

4. Dispositif selon la revendication 3, caractérisé en ce que le mandrin axial (14) comprend une broche tubulaire rigide (52) de diamètre légèrement inférieur au diamètre de l'alésage axial (3) de stator (1), la broche tubulaire (52) étant munie d'un alésage axial de broche (53) dans lequel coulisse à faible jeu une tige de mandrin (54) entraînée en translation par des moyens d'entraînement (55), la broche tubulaire (52) étant prolongée par un manchon axial tubulaire (15) en matière élastiquement déformable présentant, à l'état de repos, un diamètre extérieur sensiblement égal au diamètre de broche tubulaire rigide (52), et comportant un alésage axial de manchon (56) dont le diamètre intérieur, à l'état de repos, est inférieur au diamètre de l'alésage axial (53) de broche, de sorte que la pénétration axiale de la tige de mandrin (54) dans le manchon axial tubulaire (15) provoque la dilatation radiale appropriée dudit manchon axial tubulaire (15), et que le retrait de la tige de mandrin (54) provoque le retrait du manchon axial tubulaire (15) à son état de repos.

5. Dispositif selon la revendication 4, caractérisé en ce que le manchon axial tubulaire (15) est réalisé en polyuréthane de dureté SHORE comprise entre 25 et 30.

6. Dispositif selon l'une des revendications 4 ou 5, caractérisé en ce que l'extrémité de la tige de mandrin (54) comporte une partie conique (57) qui vient se loger légèrement en retrait de l'extrémité antérieure du manchon axial tubulaire (15) lorsque la tige de mandrin (54) est en position d'avance maximale, conférant au manchon axial tubulaire (15) une forme extérieure présentant une partie antérieure conique (150).

7. Dispositif selon l'une quelconque des revendications 4 à 6, caractérisé en ce que le manchon axial tubulaire (15) comprend au moins deux nervures extérieures longitudinales dans lesquelles se logent des tiges longitudinales de maintien solidaires de la broche tubulaire rigide (52) et assurant le maintien du manchon axial tubulaire en bout de la broche tubulaire rigide (52).

8. Dispositif selon la revendication 7, caractérisé en ce que les tiges longitudinales de maintien raccordent à la broche tubulaire rigide (52) une tête rigide (51) de mandrin prolongeant le manchon axial tubulaire (15).

9. Dispositif selon la revendication 8, caractérisé en ce que la tête rigide (51) de mandrin est pointue, pour favoriser sa pénétration axiale dans la tête de bobinage (7).

10. Dispositif selon l'une quelconque des revendications 3 à 9, caractérisé en ce que le support de stator (31) est un berceau (36) formé de parois inférieure et latérales, comportant des butées antérieures (37, 38) contre lesquelles le circuit magnétique (2) de stator (1) vient en appui et est bloqué en translation axiale, les butées antérieures (37, 38) autorisant le libre passage du mandrin axial mobile (14).

11. Dispositif selon l'une quelconque des revendications 3 à 10, caractérisé en ce qu'il comprend en outre un support mobile de capot isolant (44), actionné en translation axiale par des moyens d'actionnement de capot (43), agencé pour supporter un capot isolant (16) et l'introduire axialement sur la tête de bobinage (7) d'un stator disposé sur le support de stator (31).

## Patentansprüche

1. Verfahren zur Isolierung eines Spulenkopfes eines Stators (1) eines Elektromotors, wobei der Stator (1) einen im wesentlichen zylindrischen Eisenkreis (2) aufweist, der von einer zylindrischen Axialbohrung (3) durchsetzt und mit Längsrippen versehen ist, elektrische Leiter, die in dem Stator bewickelt sind und in den Längsrippen untergebrachte längliche Leiterbereiche und endseitige Leiterbereiche umfassen, welche über den Eisenkreis (2) endseitig vorstehen und umgebogen sind, um von einer Längsrippe zu der nächsten überzugehen, wobei die Gesamtheit der umgebogenen endseitigen Leiterbereiche einen Spulenkopf (7) bildet, dessen Isolierung durch eine Isolierkappe (16) gesichert ist, die eine zylindrische Innenwand (18) und eine zylindrische Außenwand (17) aufweist, welche durch eine Stirnwand (19) koaxial zueinander ausgerichtet sind, um eine ringförmige Aufnahme (20) auszubilden, welche den Spulenkopf (7) enthält, wobei die zylindrische Innenwand (18) einen Innendurchmesser im wesentlichen gleich dem Durchmesser der Axialbohrung (3) des Stators und die zylindrische Außenwand (17) einen Außendurchmesser im wesentlichen gleich dem Außendurchmesser des Eisenkreises (2) des Stators (1) haben,
**gekennzeichnet** durch die folgenden Verfahrensschritte:
a) Einfügung eines Dornes (14) mit einem zugespitzten Kopf (51) in die Axialbohrung (3) des Stators (1) von dem Ende entgegengesetzt zu dem zu isolierenden Spulenkopf (7) her und axiale Verschiebung desselben für ein progressives Durchdringen des Spulenkopfes (7) und die Ausbildung eines Durchganges mit einem Durchmesser gleich dem Durchmesser des Dornes (14) durch eine Verschiebung und Verformung der elektrischen Leiter,
b) Aufweitung des den Spulenkopf (7) durchdringenden Teils (15) des Dornes, um in dem Spulenkopf einen Durchgang mit einem Durchmesser etwas größer als der Außendurchmesser der zylindrischen Innenwand (18) der Isolierkappe (16) zu erzeugen,
c) radiales Andrücken des Spulenkopfes (7) um den aufgeweiteten Teil (15) des Dornes herum, während der aufgeweitete Teil (15) des Dornes in dem Spulenkopf (7) belassen wird und sein Durchmesser erhalten bleibt, um den Außendurchmesser des Spulenkopfes (7) auf den Innendurchmesser der zylindrischen Außenwand (18) der Isolierkappe (16) zu verringern,
d) Loslassen der Außenfläche des Spulenkopfes (7), die einen Durchmesser kleiner als der Innendurchmesser der zylindrischen Außenwand (17) der Isolierkappe (16) erhält,
e) Aufpressen der Isolierkappe (16) in axialer Richtung auf den Spulenkopf (7), wobei der Dorn (14) in seiner Position und in seinem aufgeweiteten Zustand unverändert belassen wird und seine Umfangsfläche sich progressiv an den Durchgang der zylindrischen Innenwand (18) der Isolierkappe (16) anpaßt,
f) Rückbildung des aufgeweiteten Teils (15) des Dornes nach der vollständigen Anpassung der Isolierkappe (16) und axiale Zurückziehung des Dornes (14) aus der zylindrischen Axialbohrung (3) des Stators (1).

2. Verfahren nach Anspruch 1,
dadurch **gekennzeichnet**, daß in der den Spulenkopf (7) durchdringenden Zone die Umfangsfläche des Dornes (14) mit einer Hülse (15) aus elastischem Material einer Dicke größer als die Dicke der axialen Innenwand (18) der Isolierkappe (16) gebildet ist, derart, daß während des axialen Aufpressens der Isolierkappe (16) auf den Spulenkopf (7) der Rand der axialen Innenwand (18) die Hülse (15) aus elastischem Material verformt und sich zwischen die Hülse (15) und die Leiter einfügt, welche den Spulenkopf bilden.

3. Vorrichtung zur Isolierung eines Spulenkopfes eines Stators eines Elektromotors zur Ausübung eines Verfahrens nach einem der Ansprüche 1 oder 2, wobei der Stator (1) einen im wesentlichen zylindrischen Eisenkreis (2) aufweist, der von einer zylindrischen Axialbohrung (3) durchsetzt und mit Längsrippen versehen ist, elektrische Leiter, die in dem Stator bewickelt sind und in den Längsrippen untergebrachte längliche Leiterbereiche und endseitige Leiterbereiche umfassen, welche über den Eisenkreis (2) endseitig vorstehen und umgebogen sind, um von einer Längsrippe zu der nächsten überzugehen, wobei die Gesamtheit der umgebogenen endseitigen Leiterbereiche einen Spulenkopf (7) bildet, dessen Isolierung durch eine Isolierkappe (16) gesichert ist, die eine zylindrische Innenwand (18) und eine zylindrische Außenwand (17) aufweist, welche durch eine Stirnwand (19) koaxial zueinander ausgerichtet sind, um eine ringförmige Aufnahme (20) auszubilden, welche den Spulenkopf (7) enthält, wobei die zylindrische Innenwand (18) einen Innendurchmesser im wesentlichen gleich dem Durchmesser der Axialbohrung (3) des Stators und die zylindrische Außenwand (17) einen Außendurchmesser im wesentlichen gleich dem Außendurchmesser des Eisenkreises (2) des Stators (1) haben,
**gekennzeichnet** durch
- einen Statorträger (31), der zur Aufnahme und zum Halten eines Stators (1) während der Anpassung der Isolierkappe (16) ausgebildet ist und insbesondere sein axiales Verschieben verhindert,
- wenigstens zwei bewegliche Klemmbacken (21, 210), die Backenbetätigungsmitteln (39, 40) für ein radiales Zusammendrücken des Spulenkopfes (7) zugeordnet sind, wobei die Klemmbacken (21, 210) zwischen einer ersten Position, in welcher sie auf den Spulenkopf (7) einen Druck ausüben, um seinen Außendurchmesser auf einen Wert kleiner als den Innendurchmesser der zylindrischen Außenwand (17) der Isolierkappe (16) zu verringern, und einer zweiten Position verschiebbar sind, in welcher sie auf Abstand zu dem Spulenkopf (7) sind und den Durchgang der zylindrischen Außenwand (17) der Isolierkappe (16) erlauben,
- einen beweglichen Axialdorn (14), der einen aufweitbaren Teil (15) aufweist,
- Mittel (49, 50) für eine axiale Verschiebung des Dornes zwischen einer zurückgezogenen Position, in welcher er auf Abstand zu dem in dem Statorträger (31) gehaltenen Stator (1) ist, und einer Einführposition, in welcher der Dorn (14) die Axialbohrung (3) des Stators (1) durchdringt und in welcher der aufweitbare Teil (15) des Dornes (14) in der zur Aufnahme des Spulenkopfes (7) bestimmten Zone in Bezug auf die Klemmbacken (21, 210) angeordnet ist,
- Mittel (54) zur Aufweitung des aufweitbaren Teils (15) des Dornes und sein wahlweises Anpassen an einen Durchmesser etwas größer als der Außendurchmesser der zylindrischen Innenwand (18) der Isolierkappe (16).

4. Vorrichtung nach Anspruch 3,
dadurch **gekennzeichnet**, daß der Axialdorn (14) eine starre Rohrpinole (52) mit einem Durchmesser etwas kleiner als der Durchmesser der Axialbohrung (3) des Stators (1) aufweist, wobei die Rohrpinole (52) mit einer Pinolenaxialbohrung (53) versehen ist, in welcher ein Dornschaft (54) mit geringem Spiel geführt ist, der durch Antriebsmittel (55) in eine Translationsbewegung versetzt wird, wobei die Rohrpinole (52) mit einer axialen rohrförmigen Hülse (15) aus elastisch verformbarem Material verlängert ist, welche im Ruhezustand einen Außendurchmesser im wesentlichen gleich dem Durchmesser der starren Rohrpinole (52) ergibt und eine Hülsenaxialbohrung (56) aufweist, deren Innendurchmesser im Ruhezustand kleiner als der Durchmesser der Pinolenaxialbohrung (53) ist, derart, daß das axiale Eindringen des Dornschaftes (54) in die axiale rohrförmige Hülse (15) die entsprechende radiale Aufweitung der axialen rohrförmigen Hülse (15) bewirkt und daß die Zurückziehung des Dornschaftes (54) die Rückbildung der axialen rohrförmigen Hülse (15) in ihren Ruhezustand bewirkt.

5. Vorrichtung nach Anspruch 4,
dadurch **gekennzeichnet**, daß die axiale rohrförmige Hülse (15) aus Polyurethan mit einer Shorehärte zwischen 25 und 30 besteht.

6. Vorrichtung nach Anspruch 4 oder 5,
dadurch **gekennzeichnet**, daß das Ende des Dornschaftes (54) einen konischen Teil (57) aufweist, der eine etwas von dem vorderen Ende der axialen rohrförmigen Hülse (15) zurückgezogene Anordnung erfährt, wenn sich der Dornschaft (54) in der maximalen vorderen Position befindet, wodurch der axialen rohrförmigen Hülse (15) eine Außenform aufgegeben wird, die einen konische Vorderteil (150) aufweist.

7. Vorrichtung nach einem der Ansprüche 4 bis 6,
dadurch **gekennzeichnet**, daß die axiale rohrförmige Hülse (15) wenigstens zwei äußere Längsrippen aufweist, in welchen längliche Haltestifte zur Anordnung kommen, die mit der starren Rohrpinole (52) verbunden sind und die Anordnung der axialen rohrförmigen Hülse (15) am Ende der starren Rohrpinole (52) sichern.

8. Vorrichtung nach Anspruch 7,
dadurch **gekennzeichnet**, daß die länglichen Haltestifte an die starre Rohrpinole (52) einen starren Dornkopf (51) anschließen, welcher die axiale rohrförmige Hülse (15) verlängert.

9. Vorrichtung nach Anspruch 8,
dadurch **gekennzeichnet**, daß der starre Dornkopf (51) zugespitzt ist, um sein axiales Eindringen in den Spulenkopf (7) zu begünstigen.

10. Vorrichtung nach einem der Ansprüche 3 bis 9,
dadurch **gekennzeichnet**, daß der Statorträger (31) ein Untergestell (36) ist, das mit unteren und seitlichen Wänden gebildet ist, die vordere Anschläge (37, 38) aufweisen, gegen welche der Eisenkreis (2) des Stators (1) zur Anlage kommt und für eine axiale Bewegung gesperrt wird, wobei die vorderen Anschläge (37, 38) den freien Durchgang des beweglichen Axialdornes (14) ermöglichen.

11. Vorrichtung nach einem der Ansprüche 3 bis 10,
dadurch **gekennzeichnet**, daß sie noch einen beweglichen Isolierkappenträger (44) aufweist, der für eine axiale Bewegung durch Kappenbetätigungsmittel (43) betätigt wird, die zum Abstützen einer Isolierkappe (16) und zu deren axialem Einfügen über den Spulenkopf (7) eines auf dem Statorträger (31) angeordneten Stators vorgesehen sind.

## Claims

1. A process for insulating the coil head of an electric motor stator (1), the stator (1) comprising a generally cylindrical magnetic circuit (2) pierced by a cylindrical axial bore hole (3) provided with longitudinal ribs, electric conductors being coiled on the stator and comprising longitudinal portions of conductors housed in the longitudinal ribs and end portions of conductors protruding at the end of the magnetic circuit (2) and curved over so as to pass from one longitudinal rib to the other, the curved end portions of the conductors as a whole forming a coil head (7), the insulation of the coil head (7) being provided by an insulating cap (16) comprising an inner cylindrical wall (18) and - coaxially - an outer cylindrical wall (17) connected by a frontal wall (19) so as to form an annular housing (20) containing the coil head (7), the inner cylindrical wall (18) having an inner diameter substantially equal to the diameter of the axial bore hole (3) of the stator, the outer cylindrical wall (17) having an outside diameter substantially equal to the outside diameter of the magnetic circuit (2) of the stator (1),
characterised in that it comprises the following stages:
a) inserting into the axial bore hole (3) of the stator (1), by the end opposite the coil head (7) to be insulated, a mandrel (14) with a tapered head (51), and displacing it axially so as to pass progressively through the coil head (7) and form within the latter, by displacement and deformation of the electric conductors, a passage of diameter equal to the diameter of the mandrel (14),
b) dilating the part of the mandrel (15) passing through the coil head (7), so as to produce, within the coil head, a passage with a diameter slightly greater than the outside diameter of the inner cylindrical wall (18) of the insulating cap (16),
c) while maintaining the dilated part of the mandrel (15) in place inside the coil head (7), radially pressing the coil head (7) around the dilated part of the mandrel (15), preserving its diameter, to reduce the outside diameter of the coil head (7) to less than the inside diameter of the outer cylindrical wall (18) of the insulating cap (16),
d) releasing the outer surface of the coil head (7), which retains a diameter of less than the inside diameter of the outer cylindrical wall (17) of the insulating cap (16),
e) axially sliding the insulating cap (16) over the coil head (7), the mandrel (14) remaining in place and in the dilated state and its peripheral surface progressively retracting as it passes through the inner cylindrical wall (18) of the insulating cap (16),
f) after the insulating cap (16) is completely fitted on, retracting the dilated part of the mandrel (15), and axially withdrawing the mandrel (14) from the axial bore hole (3) of the stator (1).

2. A process according to Claim 1, characterised in that, in the area passing through the coil head (7), the peripheral surface of the mandrel (14) is formed of a sleeve (15) made of elastic material of a thickness greater than the thickness of the inner axial wall (18) of the insulating cap (16), such that, while the insulating cap (16) is being slid axially over the coil head (7), the edge of the inner axial wall (18) deforms the sleeve (15) made of elastic material and becomes inserted between said sleeve (15) and the conductors forming the coil head (7).

3. A device for insulating the coil head of an electric motor stator, implementing a process according to either of Claims 1 or 2, the stator (1) comprising a generally cylindrical magnetic circuit (2) pierced by a cylindrical axial bore hole (3) provided with longitudinal ribs, electric conductors being coiled on the stator and comprising longitudinal portions of conductors housed in the longitudinal ribs and end portions of conductors protruding at the end of the magnetic circuit (2) and curved over so as to pass from one longitudinal rib to the other, the curved end portions of the conductors as a whole forming a coil head (7), and the insulation of the coil head (7) being provided by an insulating cap (16) comprising an inner cylindrical wall (18) and - coaxially - an outer cylindrical wall (17) connected by a frontal wall (19) so as to form an annular housing (20) containing the coil head (7), the inner cylindrical wall (18) having an inside diameter substantially equal to the diameter of the axial bore hole (3) of the stator, the outer cylindrical wall (17) having an outside diameter substantially equal to the outside diameter of the magnetic circuit (2) of the stator (1),
characterised in that it comprises:
- a stator support (31), shaped to receive and hold a stator (1) while the insulating cap (16) is being fitted, and in particular to prevent its axial displacement,
- at least two mobile jaws (21, 210) associated with jaw-activating means (39, 40) for radially pressing on the coil head (7), the jaws (21, 210) being displaceable between a first position in which they press on the coil head (7) to reduce its outside diameter to a value below the inside diameter of the outer cylindrical wall (17) of the insulating cap (16), and a second position in which they stand away from the coil head (7) and allow the passage of the outer cylindrical wall (17) of the insulating cap,
- an mobile axial mandrel (14) comprising an expandable part (15),
- means (49, 50) for axially displacing the mandrel (14) between a withdrawal position in which it stands away from the stator (1) held in the stator support (31), and an insertion position in which the mandrel (14) passes through the axial bore hole (3) of the stator (1) and in which the expandable part (15) of the mandrel (14) is housed facing the jaws (21, 210) in the area intended to be occupied by the coil head (7),
- means (54) for dilating the expandable part (15) of the mandrel and giving it selectively a diameter slightly greater than the outside diameter of the inner cylindrical wall (18) of the insulating cap (16).

4. A device according to Claim 3, characterised in that the axial mandrel (14) comprises a rigid tubular spindle (52) whose diameter is slightly less than the diameter of the axial bore hole (3) of the stator (1), the tubular spindle (52) being provided with an axial spindle bore hole (53) in which slides with little play a mandrel rod (54) driven in translation by drive means (55), the tubular spindle (52) being extended by a tubular axial sleeve (15) made of elastically deformable material having, in the rest state, an outside diameter substantially equal to the diameter of the rigid tubular spindle (52), and comprising an axial sleeve bore hole (56) the inside diameter of which, in the rest state, is less than the diameter of the axial spindle bore hole (53), such that the axial penetration of the mandrel rod (54) into the tubular axial sleeve (15) causes the appropriate radial dilatation of said tubular axial sleeve (15), and that withdrawing the mandrel rod (54) causes the withdrawal of the tubular axial sleeve (15) to its rest state.

5. A device according to Claim 4, characterised in that the tubular axial sleeve (15) is made of polyurethane with a SHORE hardness of between 25 and 30.

6. A device according to either of Claims 4 or 5, characterised in that the end of the mandrel rod (54) comprises a conical part (57) which comes to be housed slightly withdrawn from the front end of the tubular axial sleeve (15) when the mandrel rod (54) is in the maximum forward position, conferring on the tubular axial sleeve (15) an outer form with a conical front part (150).

7. A device according to any of Claims 4 to 6, characterised in that the tubular axial sleeve (15) comprises at least two longitudinal outer ribs in which are housed longitudinal support rods integral to the rigid tubular spindle (52) and providing a support for the tubular axial sleeve at the end of the rigid tubular spindle (52).

8. A device according to Claim 7, characterised in that the longitudinal support rods connect a rigid mandrel head (51) to the rigid tubular spindle (52) extending the tubular axial sleeve (15).

9. A device according to Claim 8, characterised in that the rigid mandrel head (51) is pointed, to favour its axial penetration into the coil head (7).

10. A device according to any one of Claims 3 to 9, characterised in that the stator support (31) is a cradle (36) formed of lower and side walls, comprising front limit stops (37, 38) against which the magnetic circuit (2) of the stator (1) comes to rest and is blocked in axial translation, the front limit stops (37, 38) permitting the free passage of the mobile axial mandrel (14).

11. A device according to any one of Claims 3 to 10, characterised in that it further comprises a mobile insulating cap support (44), activated in axial translation by cap activating means (43), arranged to support an insulating cap (16) and introduce it axially over the coil head (7) of a stator disposed on the stator support (31).
